# EUROPÄISCHE PATENTSCHRIFT

(11) **EP 1 332 081 B1**
(45) Veröffentlichungstag und Bekanntmachung des Hinweises auf die Patenterteilung: **06.10.2004**
(21) Anmeldenummer: 01983579.2
(22) Anmeldetag: 03.11.2001
(51) Int. Cl.: B62D 1/19, B21D 39/04, B23P 11/00, F16F 7/09

(54) **MANTELROHR EINER LENKSÄULE EINES KRAFTFAHRZEUGES UND EIN VERFAHREN ZUR HERSTELLUNG DES MANTELROHRES**
COLUMN TUBE OF A STEERING COLUMN OF A MOTOR VEHICLE AND A METHOD FOR PRODUCING THE COLUMN TUBE
JUPE DE COLONNE DE DIRECTION D'AUTOMOBILE ET PROCEDE DE PRODUCTION DE LADITE JUPE

(30) Priorität: 09.11.2000 DE 10055607
(43) Veröffentlichungstag der Anmeldung: 06.08.2003
(73) Patentinhaber: DaimlerChrysler AG, 70567 Stuttgart (DE)
(72) Erfinder: KITTLER, Holger, 20357 Hamburg (DE); LOX, Hanno, 25335 Elmshorn (DE); SPIELMANNLEITNER, Christian, 22393 Hamburg (DE)
(86) Internationale Anmeldenummer: PCT/EP2001/012751
(87) Internationale Veröffentlichungsnummer: WO 2002/038430

(56) Entgegenhaltungen:
- EP-A- 0 041 835
- AU-A- 2 995 577
- DE-A- 2 335 708
- BANSHOYA J ET AL: "ENERGY-ABSORBING STEERING COLUMN FOR SMALL CARS UTILIZES FRICTION AND PLASTIC DEFORMATION" SAE JOURNAL, SAE. NEW YORK, US, Bd. 76, Nr. 7, 1. Juli 1968 (1968-07-01), Seiten 36-38, XP002000032
- "SHAPE MEMORY ALLOY RING FASTENED ENERGY ABSORBING STEERING COLUMNS AND DEVICES" RESEARCH DISCLOSURE, KENNETH MASON PUBLICATIONS, HAMPSHIRE, GB, Nr. 371, 1. März 1995 (1995-03-01), Seite 231 XP000512406 ISSN: 0374-4353

## Beschreibung

Die Erfindung betrifft ein Mantelrohr einer Lenksäule eines Kraftfahrzeuges gemäß dem Oberbegriff des Patentanspruches 1 und ein Verfahren zur Herstellung desselben gemäß dem Oberbegriff des Patentanspruches 7.

Ein gattungsgemäßes Mantelrohr ist aus der AU 29955 77 A bekannt. Dabei sind zwei Rohrabschnitte ineinander geschoben, wobei an einem der beiden Rohrabschnitte ein Ende so ausgebildet ist, dass es reibschlüssig am Innen- oder Außenumfang des anderen Rohrabschnittes anliegt. Im Crashfall werden die Rohrabschnitte weitere ineinander geschoben, wobei sie über gesamten Verschiebeweg reibschlüssig miteinander verbunden bleiben. Dadurch wird eine besonders gute Aufnahme der Stoßenergie erreicht.

Aus der DE 23 35 708 A1 bekannt, dass zwei Rohrabschnitte so ineinandergeschoben werden, daß lediglich deren zugewandte Enden einen Überlappungsbereich bilden. In der erreichten Schiebelage sitzt das Ende des inneren Rohrabschnittes mit Preßsitz im Ende des äußeren Rohrabschnittes, wobei sich der äußere Rohrabschnitt im Anschluß an den Preßsitz stufenartig erweitert. Im Falle eines Crashs wirkt auf das Lenkgetriebe eine so hohe Axialkraft ein, daß der Preßsitz aufgehoben wird und der innere Rohrabschnitt widerstandslos in den äußeren Rohrabschnitt abtaucht. Hierdurch soll die Verletzungsgefahr des Fahrers beim Auftreffen des Kopfes auf das Lenkrad minimiert werden. Zwar wird durch das bekannte Mantelrohr zumindest ein weicherer Aufprall des Kopfes oder gar dessen Vermeidung erreicht, jedoch erbringt das Mantelrohr keinen Beitrag zur Energieabsorption, die zur Verhinderung von Verletzungen der Insassen der Fahrgastzelle, hier insbesondere auch im Fußraum des Fahrers, notwendig ist.

Der Erfindung liegt die Aufgabe zugrunde, ein gattungsgemäßes Mantelrohr und ein Herstellungsverfahren dazu dahingehend weiterzubilden, daß bei einem Fahrzeugunfall in einfacher Weise einerseits ein harter Aufprall des Fahrers auf dem Lenkrad verhindert wird und andererseits eine möglichst hohe Absorption von Stoßenergie erreicht wird.

Die Aufgabe ist erfindungsgemäß durch die Merkmale des Patentanspruches 1 hinsichtlich des Mantelrohres und durch die Merkmale des Patentanspruches 7 hinsichtlich des Verfahrens gelöst.

Aufgrund der reibschlüssigen Verbindung der teleskopierenden Rohrabschnitte über deren gesamten Verschiebeweg hinweg wird zum einen zugelassen, daß bei einer Schlagbeanspruchung des Mantelrohres, wie sie in einem Fahrzeugcrash auftritt, ein wieteres Zusammenschieben der Rohrabschnitte erfolgt und somit eine Verringerung der Aufprallhärte für den Fahrer erzielt wird, und zum anderen durch die permanente Reibarbeit bei der Relativverschiebung der Rohrabschnitte aneinander in erheblichem Maße kinetische Energie, d.h. Stoßenergie umgewandelt wird. Die Gestaltung eines derartigen funktionellen Mantelrohres läßt sich erfindungsgemäß sehr einfach darstellen. So können als Ausgangsprodukte geringaufwendig und billig herzustellende, geradlinig verlaufende, beispielsweise gezogene oder aus einer Platine erzeugte und nach Rollformen längsnahtgeschweißte Rohre verwendet werden, die zudem formgleich ausgebildet sind und lediglich unterschiedliche Abmessungen aufweisen müssen, so daß sie mit Spiel ineinandersteckbar sind. Durch das lose Ineinanderstecken können die Rohrabschnitte axial sehr exakt zueinander positioniert werden, so daß nach Erhalt der reibschlüssigen Verbindung ein in seiner Länge nahezu toleranzfreies Mantelrohr reproduzierbar entsteht. Durch die lokale relative Aufweitung des inneren Rohrabschnittes gegenüber dem äußeren in der Stecklage der beiden Rohrabschnitte werden die beiden Rohrabschnitte ohne großen Aufwand aneinander reibschlüssig festgesetzt. Die Aufweitung geht soweit, dass sich beide Rohrabschnitte durch einen Formschluss miteinander verbinden, wodurch in günstiger Weise eine besonders hohe Stoßenergieabsorption erzielt wird. Dies kann durch thermisches Aufschrumpfen oder Magnetimpulsumformen des äußeren Rohrabschnittes auf den inneren Rohrabschnitt bei Beibehaltung dessen Umfangsgröße geschehen. Gleichrangig ist die Aufweitung des inneren Rohrabschnittes bei Beibehaltung der Umfangsgröße des äußeren Rohrabschnittes beispielsweise durch Räumen betreibbar. Der Reibschluß ist durch die Wahl der Prozeßparameter der Herstellungsverfahren gezielt einstellbar, wobei für den Crashfall eine bestimmte axiale Verschiebekraft festgelegt und somit ein einheitlicher Kraftverlauf erwirkt werden kann. Mit dieser Wahl kann der Kraftverlauf beliebig nach Wunsch und Bedarf variiert werden.

Zweckmäßige Ausgestaltungen der Erfindung können den Unteransprüchen entnommen werden; im übrigen ist die Erfindung anhand eines in den Zeichnungen dargestellten Ausführungsbeispieles nachfolgend näher erläutert; dabei zeigt:
Fig. 1 in einem seitlichen Längsschnitt ein erfindungsgemäßes Mantelrohr in einer nicht-axialkraftbeaufschlagten Stellung der Rohrabschnitte,
Fig. 2 in einem seitlichen Längsschnitt das Mantelrohr aus Fig. 1 in einer axialkraftbeaufschlagten Stellung der Rohrabschnitte.

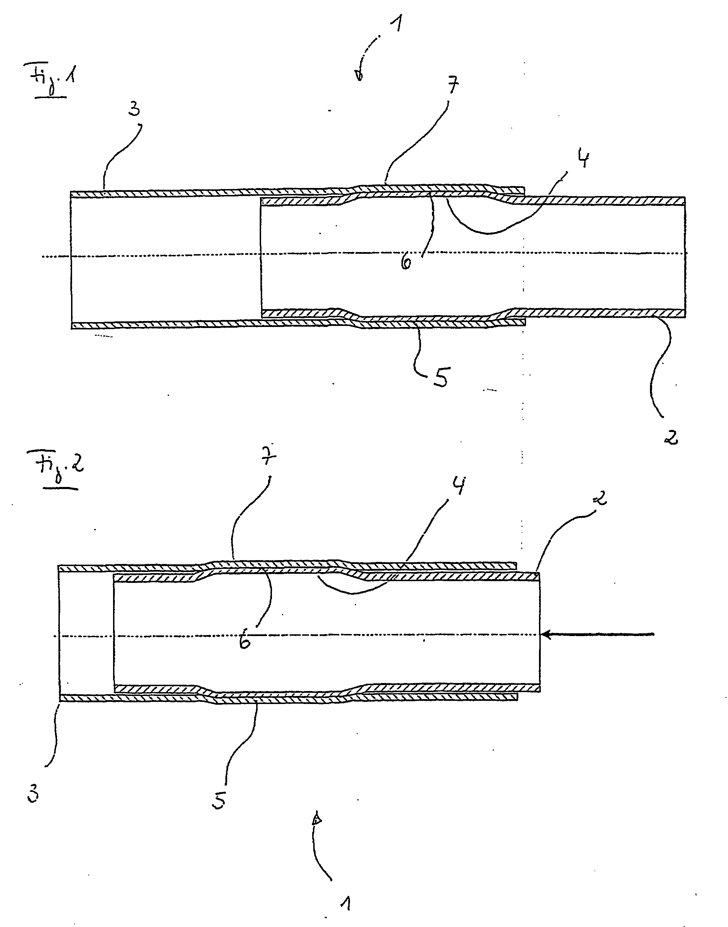

In Fig. 1 ist schematisch ein Mantelrohr 1 einer Lenksäule eines Kraftfahrzeuges dargestellt, welches aus zwei teleskopierenden formgleichen Rohrabschnitten 2 und 3 besteht. Die beiden Rohrabschnitte 2 und 3 sind reibschlüssig in einem Preßsitz miteinander verbunden und im Crashfall über einen axialen Verschiebeweg hinweg relativ zueinander verschiebbar. Der Reibschluß ist im vorliegenden Ausführungsbeispiel durch eine plastische Aufweitung 4 des innenliegenden Rohrabschnittes 2 und durch eine elastische rückfedernde Verformung 7 des außenliegenden Rohrabschnittes 3 gegeben. Obwohl die Anlage der Wandungen 5 und 6 der Rohrabschnitte 2 und 3 im Bereich der Aufweitung 4 durchaus punktuell sein kann, ist es für eine möglichst hohe Übertragung des stoßinduzierten Kraftmomentes vom inneren Rohrabschnitt 2 auf den äußeren 3 und damit für die Höhe der Stoßenergieabsorption vorteilhaft, die Anlage zwar axial lokal jedoch umlaufend zu gestalten. Die Größe der Aufweitung 4 im gezeigten Ausführungsbeispiel ist so gehalten, daß ein die Stoßenergieabsorption noch verstärkender Formschluß durch eine merkliche elastisch aufweitende Verformung 7 des äußeren Rohrabschnittes 3 entsteht, die der Kontur der Aufweitung 4 formgetreu folgt. Aufgrund der elastisch rückfedernden Ausbildung der Verformung 7 ist der äußere Rohrabschnitt auch nach dem Crash für den Zusammenbau eines neuen Mantelrohres wiederverwendbar. Die Aufweitung 4 des Rohrabschnittes 2 kann auch derart sein, daß zumindest optisch keine Aufweitung bzw. Verformung 7 des Rohrabschnittes 3 erkennbar und somit kein Formschluß vorhanden ist. Die Verformung 7 des Rohrabschnittes kann schließlich auch noch plastifiziert sein, wodurch einer am Rohrabschnitt 2 axial angreifenden Kraft beim Crash ein größerer Widerstand entgegengebracht und somit die Energieabsorptionswirkung weiter verstärkt wird.

Wirkt nun eine axiale Stoßkraft der Pfeilrichtung entsprechend auf den inneren Rohrabschnitt 2, taucht dieser gemäß Fig. 2 weiter in den äußeren Rohrabschnitt 3 nahezu bis zur völligen Überlappung ein. Bei bleibendem Plastifizierungszustand des inneren Rohrabschnittes 2 verschiebt sich der Preßsitz lediglich axial und wird zu keiner Zeit aufgehoben, so daß die reibschlüssige Verbindung der Rohrabschnitte 2,3_über den gesamten Verschiebeweg hinweg aufrecht erhalten bleibt. Somit wird während der gesamten Zeitdauer des Stoßes in günstiger Weise kinetische Energie in Reibungsenergie umgewandelt, während durch das Ineinanderschieben der Rohrabschnitte 2,3 das mit dem Mantelrohr 1 verbundene Lenkrad bezüglich des Aufpralls des Fahrers axial nachgiebig ist, so daß dieser einen "weichen" Aufprall erfährt. Zu dem muß der in Ruhelage bestehende Formschluß der Aufweitung 4 mit der Verformung 7 der Rohrabschnitte 2,3 infolge der Elastizität des äußeren Rohrabschnittes 3 entlang des gesamten Verschiebeweges permanent überwunden werden, so daß während des Stoßes ständig Verformungsarbeit vom inneren Rohrabschnitt 2 geleistet werden muß. Dies hilft zusätzlich bei der Stoßenergieabsorption. Aufgrund der Überlappungszone beider Rohrabschnitte 2,3 wird dort eine Doppelwandigkeit des Mantelrohres 1 erzielt, was für dieses eine besonders hohe Knicksteifigkeit erbringt, die ein unkontrolliertes Biegeverhalten des Mantelrohres 1 im Crashfall weitgehend verhindert. In der Variante von mangelnder Elastizität des äußeren Rohrabschnittes 3 wird dieser infolge der axialen Relativverschiebung beider Rohrabschnitte 2,3 plastisch aufgetulpt, wobei ein hohes Maß an Stoßenergie in Deformationsenergie umgesetzt wird.

Zur Herstellung des Mantelrohres 1 werden die zwei Rohrabschnitte 2 und 3 mit Spiel derart zusammengesteckt, daß der innere Rohrabschnitt 2 aus dem äußeren Rohrabschnitt 3 herausragt. In dieser Stecklage werden die Rohrabschnitte 2 und 3 miteinander reibschlüssig verpreßt, wobei ein Reibschluß eingestellt wird, der nur so groß ist, daß die Rohrabschnitte 2 und 3 im Crashfall über einen axialen Verschiebeweg hinweg relativ zueinander verschiebbar sind. Der innere Rohrabschnitt 2 wird mittels fluidischem Innenhochdruck plastisch aufgeweitet. Hierdurch kann höchst exakt und reproduzierbar der Reibschluß zwischen den beiden Rohrabschnitten 2,3 mit einer gewünschten definierten Reibkraft eingestellt werden, wobei die Prozeßparameter optimal überwachbar sind. Dies trägt wesentlich zu ein einheitlichen Sicherheitsstandard bei, wobei das Mantelrohr 1 praktisch keine Streuung in seinem Crashverhalten aufweist. Des weiteren spielen dazu aufgrund der konturgetreuen Anlegung des Materials des Abschnittes 2 im Bereich der Aufweitung 4 an die Wandung 6 des Abschnittes 3 Fertigungstoleranzen der beiden Abschnitte 2 und 3, die durch die starke Abhängigkeit der Axialkraft von der Qualität der Kontaktflächen der Abschnitte 2,3 bei herkömmlichen Mantelrohren mit teleskopierenden Rohrabschnitten zu hohen Axialkraftstreuungen und damit zu einer sehr unscharfen Einschätzung des Crashverhaltens des Mantelrohres 1 und damit der Lenksäule führen, so daß aufwendige Nacharbeiten erforderlich sind, in höchst vorteilhafter Weise keine Rolle mehr.

Hierbei wird eine an einen Fluidhochdruckerzeuger angeschlossene Aufweitlanze mit einer Axialbohrung und zumindest einer in einen durch Radialdichtungen abgedichteten Ringkanal am Lanzenmantel mündenden Querbohrung in den Rohrabschnitt 2 hineingeschoben, so daß der Ringkanal an der axialen Stelle der zu erzeugenden Aufweitung 4 zu liegen kommt. Über die Bohrungen wird dann ein Druckfluid eingeleitet und die entsprechende Stelle des Abschnittes 2 partiell - in der Zone zwischen den zwei Radialdichtungen - druckbeaufschlagt. Infolgedessen weitet sich erwartungsgemäß die Wandung 5 des Abschnittes 2 dort allseitig radial auf und wird an die Wandung 6 des äußeren Abschnittes 3 umlaufend angepreßt. Voraussetzung für den erzielten Reibschluß ist, daß der Rohrabschnitt 3 aus einem Werkstoff mit höherer Elastizitätsgrenze besteht als der innere. Abschnitt 2. Auf diese Weise stellt sich nach der Fluidhochdruckentspannung und Relaxierung des elastischen.Verformungsanteils beider Rohrabschnitt 2 und 3 ein Gleichgewichtszustand ein, der auf einer positiven Radialzuspannung des Abschnittes 3 und einer negativen Radialzugspannung des Abschnittes 2 basiert. Vereinfacht gesagt wird die Preßpassung durch eine plastische Aufweitung des innenliegenden Abschnittes 2 und durch eine elastische rückfedernde Verformung des äußeren Abschnittes 3 gebildet.

Beim gezeigten Beispiel wird auch noch über die Aufweitung des inneren Rohrabschnittes 2 eine Verformung 7 des äußeren Abschnittes 3 erreicht, die jedoch unterhalb der Plastifizierungsgrenze liegt. Hierdurch wird sowohl ein Reib- als auch ein Formschluß erzielt. Die Bildung eines Formschlusses ist jedoch nicht zwingend und nur von der Einstellung der Verfahrensparameter des Innenhochdruckumformverfahrens abhängig. Selbstverständlich kann damit auch ein Reibschluß ohne Formschluß hergestellt werden. Um den Formschluß hinsichtlich der gesteigerten Umsetzung von Stoßenergie in Deformationsenergie zu vergrößern, können auch beide Rohrabschnitte 2,3 plastisch aufgeweitet werden.

## Patentansprüche

1. Mantelrohr einer Lenksäule eines Kraftfahrzeuges, welches aus zwei teleskopierenden Rohrabschnitten besteht, die reibschlüssig in einem Preßsitz miteinander verbunden und im Crashfall über einen axialen Verschiebeweg hinweg relativ zueinander verschiebbar sind, wobei die Rohrabschnitte über den gesamten Verschiebeweg hinweg miteinander reibschlüssig verbunden sind,
**dadurch gekennzeichnet,**
**dass** die Rohrabschnitte (2,3) in der Ruhelage zusätzlich formschlüssig miteinander verbunden sind.

2. Mantelrohr nach Anspruch 1,
**dadurch gekennzeichnet,**
**daß** der Formschluß durch eine lokale umfängliche Aufweitung (4,7) der aneinanderliegenden Wandungen (5,6) der Rohrabschnitte (2,3) gebildet ist.

3. Mantelrohr nach einem der Ansprüche 1 oder 2,
**dadurch gekennzeichnet,**
**daß** der Reibschluß durch eine plastische Aufweitung (4) des innenliegenden Rohrabschnittes (2) und durch eine elastische rückfedernde Verformung (7) des außenliegenden Rohrabschnittes (3) gebildet ist.

4. Mantelrohr nach Anspruch 2,
**dadurch gekennzeichnet,**
**daß** der Formschluß durch eine plastische Aufweitung (4) des innenliegenden Rohrabschnittes (2) und durch eine elastische rückfedernde Verformung (7) des außenliegenden Rohrabschnittes (4) gebildet ist.

5. Mantelrohr nach Anspruch 2,
**dadurch gekennzeichnet,**
**daß** der Formschluß durch eine plastische Aufweitung (4,7) der aneinanderliegenden Wandungen (5,6) beider Rohrabschnitte (2,3) gebildet ist.

6. Mantelrohr nach einem der Ansprüche 1 bis 5,
**dadurch gekennzeichnet,**
**daß** der außenliegende Rohrabschnitt (3) infolge einer axialen Relativverschiebung beider Rohrabschnitte (2,3) plastisch aufweitbar ist.

7. Verfahren zur Herstellung eines Mantelrohres einer Lenksäule eines Kraftfahrzeuges, insbesondere eines Mantelrohres nach Anspruch 1, wobei zwei Rohrabschnitte derart zusammengesteckt werden, daß der innere Rohrabschnitt aus dem äußeren Rohrabschnitt herausragt, und wobei die Rohrabschnitte miteinander reibschlüssig verpreßt werden, derart, daß sie im Crashfall über einen axialen Verschiebeweg hinweg relativ zueinander verschiebbar sind,
**dadurch gekennzeichnet,**
**daß** die beiden Rohrabschnitte (2,3) formgleich ausgebildet und mit Spiel zusammengesteckt werden, und daß in der Stecklage der innere Rohrabschnitt (2) relativ zum äußeren Rohrabschnitt (3) unter Bildung eines Bereiches, in dem die Wandungen (5,6) der beiden Rohrabschnitte (2,3) reibschlüssig aneinanderliegen, lokal aufgeweitet wird.

8. Verfahren nach Anspruch 7,
**dadurch gekennzeichnet,**
**daß** die lokale Aufweitung (4,7) umlaufend erfolgt.

9. Verfahren nach einem der Ansprüche 7 oder 8,
**dadurch gekennzeichnet,**
**daß** die Rohrabschnitte (2,3) beim Verpressen formschlüssig miteinander verbunden werden.

10. Verfahren nach einem der Ansprüche 7 bis 9,
**dadurch gekennzeichnet,**
**daß** der innere Rohrabschnitt (2) mittels fluidischem Innenhochdruck plastisch aufgeweitet wird.

11. Verfahren nach einem der Ansprüche 7 bis 10,
**dadurch gekennzeichnet,**
**daß** beide Rohrabschnitte (2,3) plastisch aufgeweitet werden.

12. Verfahren nach einem der Ansprüche 7 bis 10,
**dadurch gekennzeichnet,**
**daß** der äußere Rohrabschnitt (3) über die Aufweitung (4) des inneren Rohrabschnittes (2) elastisch aufgeweitet wird.

## Claims

1. Jacket tube of a steering column of a motor vehicle, comprising two telescoping tube sections frictionally connected to one another in a press fit arrangement and movable relative to one another along an axial displacement path in a crash, whereby the tube sections are frictionally connected to one another over the entire displacement path,
**characterised in that**
the tube sections (2, 3) are in addition positively connected to one another in their position of rest.

2. Jacket tube according to claim 1,
**characterised in that**
the positive connection is provided by a local circumferential dilatation (4, 7) of the adjacent walls (5, 6) of the tube sections (2, 3).

3. Jacket tube according to claim 1 or 2,
**characterised in that**
the frictional connection is provided by a plastic dilatation (4) of the inner tube section (2) and by an elastically recovering deformation (7) of the outer tube section (3).

4. Jacket tube according to claim 2,
**characterised in that**
the positive connection is provided by a plastic dilatation (4) of the inner tube section (2) and by an elastically recovering deformation (7) of the outer tube section (3).

5. Jacket tube according to claim 2,
**characterised in that**
the positive connection is provided by a dilatation (4, 7) of the adjacent walls (5, 6) of the two tube sections (2, 3).

6. Jacket tube according to any of claims 1 to 5,
**characterised in that**
the outer tube section (3) can be plastically dilated as a result of the relative axial displacement of the two tube sections (2, 3).

7. Method for the production of a jacket tube of a steering column of a motor vehicle, in particular of a jacket tube according to claim 1, whereby two tube sections are so assembled that the inner tube section projects from the outer tube section, and whereby the tube sections are frictionally press-fitted to one another in a way to allow their relative movement along an axial displacement path in a crash,
**characterised in that**
the two tube sections (2, 3) are designed identical in shape and assembled with play, and **in that**, in the inserted position, the inner tube section (2) is locally dilated relative to the outer tube section (3), forming a region where the walls (5, 6) of the two tube sections (2, 3) are frictionally connected to one another.

8. Method according to claim 7,
**characterised in that**
the local dilatation (4, 7) is continuous.

9. Method according to claim 7 or 8,
**characterised in that**
the tube sections are positively connected to one another during the pressing process.

10. Method according to any of claims 7 to 9,
**characterised in that**
the inner tube section (2) is plastically dilated by means of internal high fluid pressure.

11. Method according to any of claims 7 to 10,
**characterised in that**
both tube sections (2, 3) are plastically dilated.

12. Method according to any of claims 7 to 10,
**characterised in that**
the outer tube section (3) is elastically dilated via the dilation (4) of the inner tube section (2).

## Revendications

1. Jupe de colonne de direction d'automobile qui consiste en deux segments tubulaires télescopiques reliés entre eux par friction en un ajutage comprimé ct peuvent être écartés l'un par rapport à l'autre par l'intermédiaire d'une course de manoeuvre axiale en cas d'accident, sachant que les segments tubulaires sont reliés entre eux par frottement lorsqu'ils sont écartés par l'intermédiaire de l'ensemble de la course de manoeuvre, **caractérisée en ce que** les segments tubulaires (2, 3) sont en outre reliés entre eux par complémentarité de forme en position de repos.

2. Jupe selon la revendication 1, **caractérisée en ce que** la complémentarité de forme et formée par un grand élargissement (4, 7) local des parois (5, 6) de segments tubulaires (2, 3) reposant côte à côte.

3. Jupe selon l'une quelconque des revendications 1 ou 2, **caractérisée en ce que** la complémentarité par frottement est formée par un élargissement (4) plastique du segment tubulaire (2) intérieur et par une déformation (7) par retour élastique du segment tubulaire (3) extérieur.

4. Jupe selon la revendication 2, **caractérisée en ce que** la complémentarité de forme est formée par un élargissement (4) plastique du segment tubulaire (2) intérieur et par une déformation (7) par retour élastique du segment tubulaire (4) extérieur.

5. Jupe selon la revendication 2, **caractérisée en ce que** la complémentarité de forme est formée par un élargissement (4, 7) plastique des parois (5, 6) des deux segments tabulaires (2, 3) reposant côte à côte.

6. Jupe selon l'une quelconque des revendications 1 à 5, **caractérisée en ce que** le segment tubulaire (3) extérieur peut être élargi de manière élastique à la suite d'un glissement relatif axial des deux segments tubulaires (2, 3).

7. Procédé de production d'une jupe de colonne de direction d'automobile, notamment d'une jupe selon la revendication 1, sachant que deux segments tubulaires sont reliés ensemble de sorte que le segment tubulaire intérieur fasse saillie hors du segment tubulaire extérieur et sachant que les segments tubulaires sont comprimés entre eux par friction de manière à être écartés l'un par rapport à l'autre par l'intermédiaire d'une course de manoeuvre axiale en cas d'accident, **caractérisé en ce que** les deux segments tubulaires (2, 3) sont de forme identique et sont reliés entre eux avec un certain jeu et qu'en position reliée, le segment tubulaire (2) intérieur est élargi localement par rapport au segment tubulaire (3) extérieur, en cas de formation d'une zone dans laquelle les parois (5, 6) des deux segments tubulaires (2, 3) reposent côte à côte par frottement.

8. Procédé selon la revendication 7, **caractérisé en ce que** l'élargissement (4, 7) local se produit par rotation.

9. Procédé selon l'une quelconque des revendications 7 ou 8, **caractérisé en ce que** les segments tubulaires (2, 3) sont reliés entre eux par complémentarité de forme en les comprimant.

10. Procédé selon l'une quelconque des revendications 7 à 9, **caractérisé en ce que** le segment tubulaire (2) intérieur est élargi de manière plastique au moyen d'une haute pression interne fluide.

11. Procédé selon l'une quelconque des revendications 7 à 10, **caractérisé en ce que** les deux segments tubulaires (2, 3) sont élargis de manière plastique.

12. Procédé selon l'une quelconque des revendications 7 à 10, **caractérisé en ce que** le segment tubulaire (3) extérieur est élargi de manière élastique par l'intermédiaire d'un élargissement (4) du segment tubulaire (2) intérieur.
